# EUROPÄISCHE PATENTANMELDUNG

(11) **EP 4 462 208 A1**
(43) Veröffentlichungstag der Anmeldung: **13.11.2024**
(21) Anmeldenummer: 24175206.2
(22) Anmeldetag: 10.05.2024
(51) Int. Cl.: G05B 19/4097, B65G 47/74

(54) **PARAMETRIERUNG EINER FÜHRUNGSGARNITUR FÜR EINE BEHÄLTERTRANSPORTVORRICHTUNG**

(30) Priorität: 10.05.2023 DE 102023112373
(71) Anmelder: KRONES AG, 93073 Neutraubling (DE)
(72) Erfinder: Obermeier, Dr., Martin, 93073 Neutraubling (DE)
(74) Vertreter: Nordmeyer, Philipp Werner

(57) **Zusammenfassung**

Verfahren, Computerprogramm sowie System (200) zur Parametrierung einer Führungsgarnitur (40) zum Führen von Behältern (100) entlang einer Trajektorie in einer Vorrichtung (1) zum Transportieren der Behälter (100), vorzugsweise in einer Getränkeabfüllanlage, wobei das Verfahren aufweist: Erstellen eines Systemmodells (210), umfassend zumindest Abhängigkeiten zwischen der Führungsgarnitur (40) und den zu transportierenden Behältern (100); Erstellen zumindest eines CAD-Modells (220) der Behälter (100); Übergeben des Systemmodells (210) und/oder daraus abgeleiteter Informationen sowie des CAD-Modells (220) der Behälter (100) und/oder daraus abgeleiteter Informationen als Instanz an ein Lösungssystem (230); Ermitteln unter Anwendung des Lösungssystems (230) zumindest eines Parametersatzes (240) für die Führungsgarnitur (40).

## Beschreibung

### Technisches Gebiet

Die vorliegende Erfindung betrifft ein Verfahren, ein Computerprogramm und ein System zur Parametrierung einer Führungsgarnitur zum Führen von Behältern entlang einer Trajektorie in einer Vorrichtung zum Transportieren der Behälter, vorzugsweise in einer Getränkeabfüllanlage.

### Stand der Technik

Auf dem Gebiet der Behälterbehandlung, beispielsweise der Getränkeabfüllung, werden die Behälter wie etwa Glasflaschen, Kunststoffflaschen, Dosen, Kartonagen usw. typischerweise mittels Fördereinrichtungen durch die jeweiligen Behandlungsstationen transportiert. Die Fördereinrichtungen fördern die Behälter entlang vorgegebener Pfade mittels Transportbändern, Transportsternen und dergleichen. Häufig werden Fördereinrichtungen in Rundläuferbauweise angewendet, welche die Behälter entlang eines kreisförmigen Pfads transportieren. Im Fall des Befüllens von Behältern mit einem Füllprodukt ist hierfür eine Vielzahl von Füllorganen an einem Karussell montiert, das die Behälter zumeist über einen Einlaufstern empfängt, wobei die Behälter anschließend während eines kontinuierlichen Umlaufs über die Füllorgane befüllt werden. Die Befüllung wird innerhalb eines Teilkreises des Rundläufers durchgeführt. Nach der Befüllung werden die Behälter beispielsweise über einen Auslaufstern abtransportiert.

Um die Behälter auf dem vorgegebenen Pfad zu halten und in der gewünschten Ausrichtung zu stabilisieren, ist es bekannt, spezielle Führungseinrichtungen (auch als "Führungsgarnitur" bezeichnet) zu installieren, die mit den transportierten Behältern seitlich in Kontakt stehen oder in Kontakt kommen können und so eine Abweichung der Behälter vom gewünschten Pfad verhindern. Führungsgarnituren können mit den Behältern mitlaufen oder stationär sein. Solche Führungsgarnituren werden im gesamten Prozessablauf einer Behälterbehandlung, umfassend beispielsweise Reinigen, Sterilisieren, Befüllen, Verschließen, Etikettieren, Inspizieren usw., eingesetzt.

Es ist bekannt, Führungsgarnituren verstellbar oder auswechselbar zu konstruieren, um verschiedene Behältergrößen bzw. unterschiedliche Behältertypen handhaben zu können. Führungsgarnituren dieser Art gehen beispielsweise aus der DE 10 2011 054 639 A1, WO 2006/056372 A1 und DE 10 2015 121 081 A1 hervor.

Die Verstellung einer Führungsgarnitur kann manuell oder mittels Aktuatoren erfolgen. In beiden Fällen besteht die Möglichkeit, dass die Führungsgarnitur nicht richtig oder nicht optimal auf die zu behandelnden Behältertypen eingestellt ist. Ist die Führungsgarnitur zu eng, können Behälter und/oder Anlagenteile beschädigt werden; ist sie zu weit, besteht die Gefahr, dass die Behälter nicht ordnungsgemäß transportiert und behandelt werden.

Im Fall einer automatischen Garniturenverstellung erfolgt die Parametrierung mittels einer Mensch-Maschine-Schnittstelle (HMI) über einen Bediener. Hierbei werden beispielsweise die Garniturenhöhe und der Behälterdurchmesser für die Garniturenverstellung manuell eingerichtet. Eine solche manuelle Einrichtung ist jedoch fehleranfällig, da bei einer etwaigen Fehlbedienung Kollisionen möglich sind und damit das Schadensrisiko steigt. Zudem ist die Ermittlung der korrekten Parameter etwa über Versuch und Irrtum zeitaufwändig und von der Qualifikation/Kompetenz des Bedieners abhängig.

### Darstellung der Erfindung

Eine Aufgabe der Erfindung besteht darin, ein verbessertes Verfahren, ein Computerprogramm und ein verbessertes System zur Parametrierung einer Führungsgarnitur zum Führen von Behältern entlang einer Trajektorie in einer Vorrichtung zum Transportieren der Behälter, vorzugsweise in einer Getränkeabfüllanlage, bereitzustellen.

Die Aufgabe wird durch ein Verfahren mit den Merkmalen des Anspruchs 1, ein Computerprogramm mit den Merkmalen des Anspruchs 10 sowie ein System mit den Merkmalen des Anspruchs 11 gelöst. Vorteilhafte Weiterbildungen folgen aus den Unteransprüchen, der folgenden Darstellung der Erfindung sowie der Beschreibung bevorzugter Ausführungsbeispiele.

Das Verfahren dient der Parametrierung einer Führungsgarnitur zum Führen von Behältern entlang einer Trajektorie in einer Vorrichtung zum Transportieren der Behälter. Der Transport der Behälter, geführt durch die Führungsgarnitur, kann entlang einer linearen oder gekrümmten Trajektorie sowie einer Mischung aus beiden erfolgen. Insbesondere sind Vorrichtungen in Rundläuferbauweise umfasst, bei denen die Behälter zumindest abschnittsweise entlang eines kreisförmigen Wegs transportiert werden.

Die Behälter können Glasflaschen, Kunststoffflaschen, Dosen, Kartonagen usw. sein, wobei insbesondere PET-Flaschen in Betracht kommen.

Neben dem eigentlichen Transport der Behälter ist die Vorrichtung vorzugsweise eingerichtet, um die Behälter zu behandeln, insbesondere zu befüllen und/oder zu verschließen. Besonders bevorzugt kommt die Vorrichtung in einer Getränkeabfüllanlage zur Anwendung, beispielsweise zur Abfüllung von Wasser (still oder karbonisiert), Softdrinks, Smoothies, Säften, Bier, Wein, Milchprodukten, Mischgetränken und dergleichen.

Die Vorrichtung weist eine Führungsgarnitur auf, deren Hauptfunktion darin besteht, die Behälter während des Transports entlang der gewünschten Trajektorie zu führen und gegebenenfalls zu stabilisieren. Insbesondere die Position relativ zur gewünschten Trajektorie und/oder die Ausrichtung der Behälter werden durch die Führungsgarnitur sichergestellt, indem zumindest Abschnitte der Führungsgarnitur mit den transportierten Behältern in Kontakt stehen oder in Kontakt kommen können, um auf diese Weise eine Abweichung vom gewünschten Transportverhalten zu verhindern.

Die Führungsgarnitur ist vorzugsweise als stationäre Führung ausgebildet, d.h. sie ist bis auf eine etwaige Möglichkeit der Justierung/Einstellung feststehend. Allerdings kann die Führungsgarnitur zumindest abschnittsweise auch als mitlaufende Führung ausgebildet sein, beispielsweise wenn sie als innere Führung Bestandteil eines Transportkarussells ist oder mit dem Karussell synchron umläuft, so dass während des Transports zwischen einem Behälter und dem entsprechenden Abschnitt der Führungsgarnitur keine Relativbewegung stattfindet.

Das erfindungsgemäße Verfahren zur Parametrierung der Führungsgarnitur einer solchen Vorrichtung umfasst die Schritte: Erstellen eines Systemmodells, umfassend zumindest Abhängigkeiten zwischen der Führungsgarnitur und den zu führenden Behältern; Erstellen zumindest eines CAD-Modells der Behälter; Übergeben des Systemmodells und/oder daraus abgeleiteter Informationen sowie des CAD-Modells der Behälter und/oder daraus abgeleiteter Informationen als Instanz an ein Lösungssystem; Ermitteln unter Anwendung des Lösungssystems zumindest eines Parametersatzes für die Führungsgarnitur.

Der eine oder die mehreren so ermittelten Parametersätze betreffen in erster Linie Position(en) und/oder Ausrichtung(en) der Führungsgarnitur. Die Führungsgarnitur kann hierbei aus einer Mehrzahl von Einzelteilen, insbesondere Kontaktteilen mit Führungsflächen, bestehen, deren Positionen und Ausrichtungen durch den zumindest einen Parametersatz repräsentiert werden.

Die so durchgeführte automatische Parametrierung der Führungsgarnitur erhöht generell die Funktionssicherheit der mit der Führungsgarnitur ausgestatten Transport- und gegebenenfalls Behandlungsvorrichtung für die Behälter. Die Führungsgarnitur ist optimal auf die zu transportierenden Behälter einstellbar, und die Gefahr einer Beschädigung der Behälter und/oder von Anlagenteilen wird minimiert.

Ferner kann auf eine manuelle, zeitintensive Parametrierung, insbesondere auf der Grundlage von Versuch und Irrtum verzichtet werden. Die Rechenzeit zur automatischen Parametrierung der Führungsgarnitur beträgt normalerweise nur wenige Sekunden, wodurch eine Umstellung der Vorrichtung auf einen anderen Behältertyp erheblich beschleunigt und die Produktionsleistung der Vorrichtung erhöht werden.

Vorzugsweise wird das Systemmodell zu einer Wissensbasis, insbesondere einer KI-Wissensbasis, transformiert, wobei diese als aus dem Systemmodell abgeleitete Informationen an das Lösungssystem übergeben wird. Vorzugsweise erfolgt die Transformation des Systemmodells zu einer Wissensbasis unter Anwendung von ASP (Answer Set Programming), d.h. unter Anwendung einer entsprechenden deklarativen Programmierung. Auf diese Weise lassen sich die relevanten Charakteristika des Systemmodels auf kompakte und gegebenenfalls standardisierte Weise darstellen und an die weitere Verarbeitung übergeben.

Vorzugsweise erfolgt die Erstellung des Systemmodells unter Zuhilfenahme einer grafischen Modellierungssprache, beispielsweise SysML, wodurch die Erstellung des Systemmodells erheblich vereinfacht und standardisiert wird.

Vorzugsweise wird das CAD-Modell der Behälter auf mögliche Kontaktflächen abgetastet, wobei diese als aus dem CAD-Modell abgeleitete Informationen an das Lösungssystem übergeben werden. Das CAD-Modell kann ein zweidimensionales oder dreidimensionales digitales Modell sein, das die zu führenden Behälter bzw. einen entsprechenden Behältertyp repräsentiert. Indem eine Abtastung der möglichen Kontaktflächen erfolgt, kann diese Information genutzt werden, um die Beschaffenheit der Führungsgarnitur, umfassend etwa Position(en) und Ausrichtung(en), zu optimieren.

Vorzugsweise wird ferner zumindest ein Optimierungsziel betreffend Führungseigenschaften der Führungsgarnitur als Teil der Instanz an das Lösungssystem übergeben, wodurch die Parametrierung der Führungsgarnitur anwendungsspezifisch beeinflusst werden kann. Das Optimierungsziel kann insbesondere auf eine hohe Führungsstabilität der Führungsgarnitur gerichtet sein und/oder einen definierten Standard betreffen. Denn über das Lösungssystem können bestimmte Lösungen ausgeschlossen oder bevorzugt werden.

Vorzugsweise ist das Lösungssystem ein KI-System, insbesondere ein ASP-Solversystem, um dadurch die Informationsverarbeitung zu standardisieren und gleichzeitig eine Optimierung des Systems über die Zeit zu ermöglichen.

Vorzugsweise werden vom Lösungssystem mehrere Parametersätze für die Führungsgarnitur erzeugt. Somit können mehrere Vorschläge für die Garniturenparameter berechnet werden, die automatisch oder durch eine Bedienperson ausgewählt und/oder adaptiert werden können.

Ferner kann eine grafische Ergebnisausgabe der so ermittelten Garniturenparameter erfolgen, welche die Weiternutzung der Parameter, umfassend etwa Auswahl und Anwendung derselben, vereinfacht.

Die Führungsgarnitur weist einen oder mehrere Kontaktteile auf, die für einen Kontakt mit den Behältern zur Führung derselben eingerichtet sind. Die Kontaktteile sind insbesondere als Verschleißteile konzipiert und somit vorzugsweise auswechselbar an einem entsprechenden Führungsrahmen anbringbar. Die Kontaktteile weisen jeweils eine Leitfläche auf, welche die tatsächliche Führung der Behälter übernehmen und zu diesem Zweck mit den zu führenden Behältern in Kontakt kommen.

Die Führungsgarnitur weist vorzugsweise mehrere, beispielsweise zwei, übereinander angeordnete Kontaktteile auf, die entsprechend an zumindest einem Führungsrahmen angebracht bzw. anbringbar sind. "Übereinander" ist in Richtung einer Behälterachse zu sehen, die durch die zumeist zylindrischen Behälter und den bestimmungsgemäßen Gebrauch der Führungsgarnitur bestimmt ist. Die übereinander angeordneten Kontaktteile sind vorzugsweise relativ zueinander höhenverstellbar installiert, so dass zwischen den Kontaktteilen, insbesondere zwischen deren jeweiligen Leitflächen, ein geeigneter Abstand eingestellt werden kann. Der Abstand ist vorzugsweise so einstellbar, dass zumindest ein Kontaktteil stets entsprechend oberhalb und unterhalb des Behälterschwerpunktes angeordnet ist.

Vorzugsweise umfasst der unter Anwendung des Lösungssystems ermittelte zumindest eine Parametersatz für die Führungsgarnitur eine Höhe der Kontaktteile und/oder eine Entfernung der Kontaktteile zur Behälterachse und/oder eine Anstellung der Kontaktteile insbesondere relative zur Behälterachse und/oder Informationen betreffend eine Variante bzw. Beschaffenheit der Kontaktteile. Auf diese Weise werden wesentliche Eigenschaften der Führungsgarnitur durch die automatische Parametrierung erfasst.

Das Verfahren kann durch Computerprogrammbefehle auf entsprechenden Mitteln zur Datenverarbeitung ausgeführt werden.

Die oben genannte Aufgabe wird ferner durch ein Computerprogramm gelöst, umfassend Befehle, die bei der Ausführung des Programms durch einen Computer diesen veranlassen, das oben dargelegte Verfahren auszuführen.

Die oben genannte Aufgabe wird ferner durch ein System zur Parametrierung einer Führungsgarnitur zum Führen von Behältern entlang einer Trajektorie in einer Vorrichtung zum Transportieren der Behälter, vorzugsweise in einer Getränkeabfüllanlage, gelöst, wobei das System Mittel zur Ausführung des Verfahrens nach einer der oben dargelegten Ausführungsvarianten umfasst.

Die Merkmale, technischen Wirkungen, Vorteile sowie Ausführungsbeispiele, die oben in Bezug auf das Verfahren beschrieben wurden, gelten analog für das Computerprogramm sowie das System.

Das System kann beispielsweise durch eine programmierbare elektronische Einrichtung oder durch eine verteilte Computerumgebung realisiert sein. Das System kann zudem mit einer Steuerung der die Führungsgarnitur aufweisenden Vorrichtung in Kommunikation stehen, wodurch sich eine automatische Verstellung der Führungsgarnitur auf der Grundlage der berechneten Parametrierung verwirklichen lässt.

Weitere Vorteile und Merkmale der vorliegenden Erfindung sind aus der folgenden Beschreibung bevorzugter Ausführungsbeispiele ersichtlich. Die darin beschriebenen Merkmale können alleinstehend oder in Kombination mit einem oder mehreren der oben dargelegten Merkmale umgesetzt werden, sofern sich die Merkmale nicht widersprechen. Die folgende Beschreibung bevorzugter Ausführungsbeispiele erfolgt dabei mit Bezug auf die begleitenden Zeichnungen.

### Kurze Beschreibung der Figuren

Bevorzugte weitere Ausführungsformen der Erfindung werden durch die nachfolgende Beschreibung der Figuren näher erläutert. Dabei zeigen:
- Figur 1: einen perspektivischen Ausschnitt einer Vorrichtung zum Transportieren und vorzugsweise Behandeln von Behältern mit einer verstellbaren Führungsgarnitur;
- Figur 2: ein Ausführungsbeispiel eines Abschnitts der Führungsgarnitur;
- Figuren 3a, 3b: schematisch beispielhafte Einstellungen der Führungsgarnitur relativ zu einem Behälter; und
- Figur 4: schematisch ein Konzept für die automatische Parametrierung der Führungsgarnitur.

### Detaillierte Beschreibung bevorzugter Ausführungsbeispiele

Im Folgenden werden bevorzugte Ausführungsbeispiele anhand der Figuren beschrieben. Dabei sind gleiche, ähnliche oder gleichwirkende Elemente in den Figuren mit identischen Bezugszeichen versehen, und auf eine wiederholte Beschreibung dieser Elemente wird teilweise verzichtet, um Redundanz zu vermeiden.

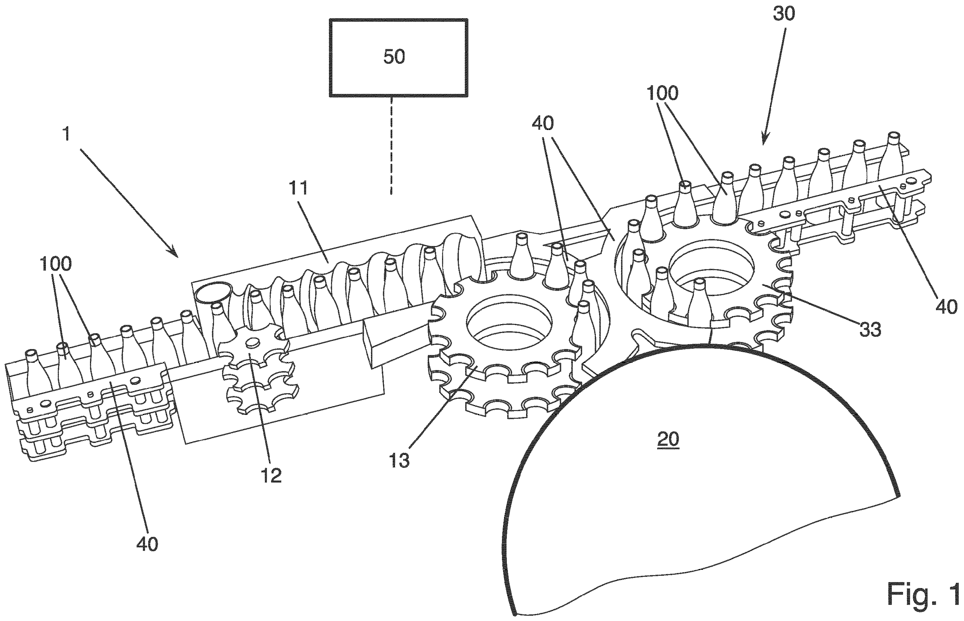

Die Figur 1 zeigt einen perspektivischen Ausschnitt einer Vorrichtung 1 zum Transportieren und vorzugsweise Behandeln von Behältern 100. Die Vorrichtung 1 weist beispielhaft drei Abschnitte auf, umfassend einen Einlaufabschnitt 10, eine Vorrichtung 20 (schematisch dargestellt) zum Behandeln, vorzugsweise Befüllen und/oder Verschließen, der Behälter 100 und einen Auslaufabschnitt 30 zum Abtransport der Behälter 100. Die Vorrichtung 20 ist hierin auch als "Behandlungsvorrichtung" bezeichnet.

Der Einlaufbereich 10 umfasst beispielhaft eine Teilungsschnecke 11, um die Behälter 100 in Zusammenwirkung mit einem Sperrstern 12 auf eine bestimmte Teilung bzw. einen gewünschten Abstand zu bringen, und einen Einlaufstern 13, der eingerichtet ist, um die Behälter 100 an die Behandlungsvorrichtung 20 zu übergeben. Der Auslaufbereich 30 umfasst einen Auslaufstern 33, der eingerichtet ist, um die von der Behandlungsvorrichtung 20 behandelten Behälter 100, beispielsweise mit einem Füllprodukt befüllten und gegebenenfalls bereits verschlossenen Behälter 100, entgegenzunehmen und abzutransportieren.

Jeder der drei Abschnitte 10, 20, 30 ist beispielhaft in Rundläuferbauweise ausgeführt, umfassend jeweils einen stationären Anlagenteil und ein Karussell, das an dem entsprechenden stationären Gestell drehbar gelagert und eingerichtet ist, um die Behälter 100 zumindest abschnittsweise entlang eines kreisförmigen Wegs zu transportieren, wodurch die Behälter 100 entlang einer Trajektorie mit kreisförmigen Segmenten transportiert werden. Die Bezeichnungen "kreisförmig", "Kreisbahn" und dergleichen sind nicht auf vollständige oder perfekte Kreise beschränkt, sondern umfassen Teilkreise bzw. Kreissegmente sowie veränderliche Kreissegmente.

Die nicht im Detail dargestellte Behandlungsvorrichtung 20 umfasst neben einem Transportkarussell in der Regel eine Vielzahl von Behandlungsorganen, beispielsweise Füllorgane und/oder Verschließorgane, die am Außenumfang des Karussells angeordnet und eingerichtet sind, um die entsprechende Behandlung an den Behältern 100 vorzunehmen. Die Behandlungsorgane bewegen sich somit gemeinsam mit den zu behandelnden Behältern 100 entlang einer kreisförmigen Trajektorie.

Die Vorrichtung 1 weist ferner eine Führungsgarnitur 40 auf, deren Hauptfunktion darin besteht, die Behälter 100 während des Transports zu führen und zu stabilisieren. Insbesondere die Position relativ zum gewünschten Transportweg sowie die Ausrichtung der Behälter 100 werden durch die Führungsgarnitur 40 sichergestellt, indem zumindest Abschnitte der Führungsgarnitur 40 mit den transportierten Behältern 100 seitlich in Kontakt stehen oder in Kontakt kommen können, um so eine Abweichung vom gewünschten Transportverhalten zu verhindern.

Die Anforderungen daran, wie restriktiv die Führungsgarnitur 40 auszulegen ist, d.h. wie stark und in welchen Richtungen die Bewegungsfreiheit der Behälter 100 durch die Führungsgarnitur 40 zu begrenzen ist, können durchaus variieren, beispielsweise in Abhängigkeit von Eigenschaften der Behälter 100 und der konkreten Anwendung der Vorrichtung 1.

Die Führungsgarnitur 40 ist vorzugsweise als stationäre Führung ausgebildet, d.h. sie ist bis auf die Möglichkeit der Justierung/Einstellung feststehend. Allerdings kann die Führungsgarnitur 40 zumindest abschnittsweise auch als mitlaufende Führung ausgebildet sein, beispielsweise wenn sie Bestandteil des betreffenden Transportkarussells 13, 33 ist oder mit dem Karussell 13, 33 synchron umläuft, so dass während des Transports zwischen einem Behälter 100 und dem entsprechenden Abschnitt der Führungsgarnitur 40 keine Relativbewegung stattfindet.

Die Führungsgarnitur 40 umfasst in der Regel mehrere individuell verstellbare Abschnitte, die beispielsweise für eine lineare Transporttrajektorie und eine kreisförmige Transporttrajektorie ausgelegt bzw. optimiert sind. Ferner kann die Führungsgarnitur 40 in der Höhenrichtung, d.h. in axialer Richtung der Behälter 100, mehrere Kontaktflächen, hierin auch als "Leitflächen" bezeichnet, aufweisen, um die Ausrichtung der Behälter 100 zu stabilisieren.

Die Führungsgarnitur 40 kann für eine automatische Verstellung entsprechende Aktuatoren (in den Figuren nicht gezeigt) aufweisen, die mit einer Steuerung 50 in Kommunikation stehen.

Die Kommunikation zwischen der Steuerung 50 und den anzusteuernden und/oder auszulesenden Komponenten kann drahtgebunden oder drahtlos, digital oder analog erfolgen. Die Kommunikation muss nicht notwendigerweise einen Informationsaustausch in beide Richtungen umfassen. Ein unidirektionaler Daten- und/oder Signalfluss fällt hierin unter den Begriff der "Kommunikation". Die Steuerung 50 muss nicht unbedingt durch eine zentrale Recheneinrichtung oder elektronische Regelung gebildet sein, sondern es sind dezentrale und/oder mehrstufige Systeme, Regelungsnetzwerke, Cloud-Systeme und dergleichen umfasst. Die Steuerung 50 kann zudem integraler Bestandteil einer übergeordneten Anlagensteuerung sein oder mit einer solchen in Kommunikation stehen.

Die Steuerung 50 ist vorzugsweise so eingerichtet, dass die Führungsgarnitur 40 unter entsprechender Ansteuerung von Aktuatoren automatisch auf verschiedene Behältertypen, umfassend beispielsweise unterschiedliche Behältergrößen, Behälterformen, Behältermaterialien usw., einstellbar ist.

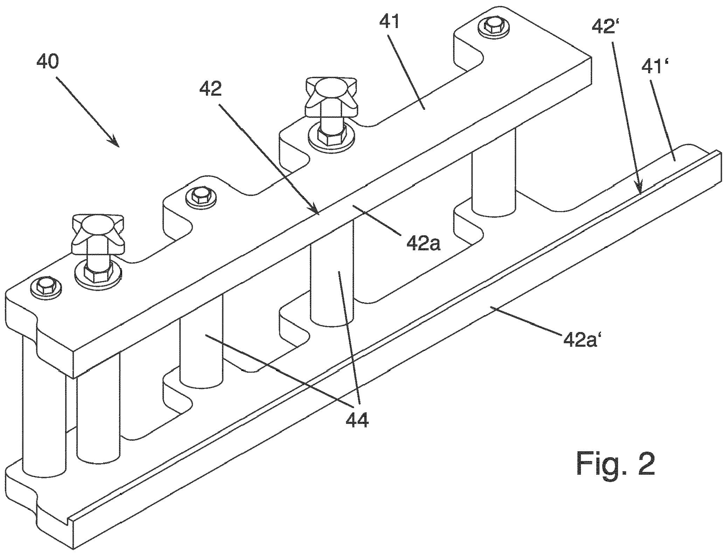

Die Figur 2 zeigt schematisch ein Ausführungsbeispiel eines Abschnitts der Führungsgarnitur 40. Die Führungsgarnitur 40 weist einen Führungsrahmen 41 sowie einen Kontaktteil 42 auf, wobei der Kontaktteil 42 als Verschleißteil auswechselbar am Führungsrahmen 41 anbringbar ist. Der Kontaktteil 42 weist eine Leitfläche 42a auf, welche die tatsächliche Führung der Behälter 100 übernimmt und zu diesem Zweck mit dem entsprechenden Behälter 100 in Kontakt kommt bzw. in Kontakt kommen kann.

Die Verriegelung des Kontaktteils 42 am Führungsrahmen 41 kann über eine geeignete Rastvorrichtung erreicht werden, beispielsweise mittels eines federbelasteten Rastbolzens, einer Nut-/Feder-Verbindung, Verschraubung usw.

Die Führungsgarnitur 40 gemäß dem Ausführungsbeispiel der Figur 2 weist zwei übereinander angeordnete Führungsrahmen 41 und 41' auf, die entsprechend zwei übereinander angeordnete Kontaktteile 42, 42' tragen. Die übereinander angeordneten Kontaktteile 41, 41' bzw.

Führungsrahmen 41, 41' sind mittels Verbindungsbolzen 44 vorzugsweise höhenverstellbar miteinander verbunden, so dass zwischen den beiden Kontaktteilen 42, 42', insbesondere zwischen deren jeweiligen Leitflächen 42a, 42a', ein geeigneter Abstand eingestellt werden kann.

Je nach Anordnung der Führungsgarnitur 40 im Förderweg der entsprechenden Transport- und/oder Behandlungsvorrichtung 10, 20, 30, Behälterbeschaffenheit, Anwendung usw. können neben den in der Figur 2 gezeigten zwei beabstandeten Kontaktteilen 42, 42' auch mehr als zwei Kontaktteile oder lediglich ein einziger Kontaktteil vorgesehen sein.

In dem Beispiel der Figur 2 sind die Leitflächen 42a, 42a` im Wesentlichen parallel und im gleichen Abstand zur Behältermitte zueinander geführt. Es kann jedoch in besonderen Ausgestaltungen oder bei bestimmten Behältergeometrien sinnvoll sein, die Leitflächen 42a, 42a` voneinander abweichend auszubilden, beispielsweise die untere Leitfläche 42a' gegenüber der oberen Leitfläche 42a nach hinten springend, oder aber, wenn beispielsweise eine Schrägstellung der Behälter 100 gewünscht ist, auch eine über den Weg hinweg veränderliche geometrische Beziehung zwischen der unteren Leitfläche 42a' und der oberen Leitfläche 42a, um die entsprechenden geometrischen Vorgaben zu erfüllen.

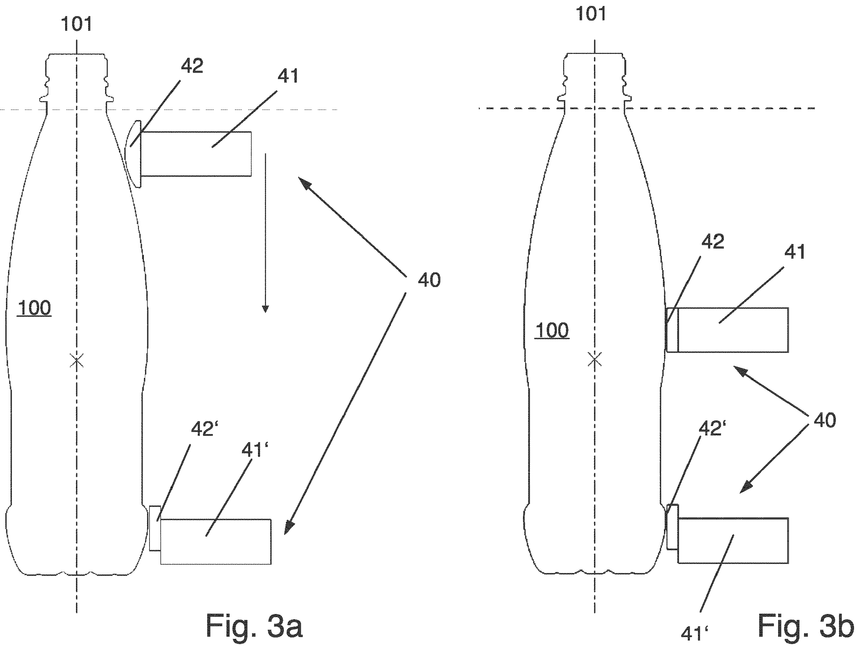

Die Figuren 3a und 3b zeigen schematisch beispielhafte Einstellung der Führungsgarnitur 40 relativ zu einem zu führenden Behälter 100. Der Behälter 100 definiert eine Behälterachse 101. Die Figur 3a zeigt einen gegenüber dem oberen Kontaktteil 42 nach hinten springenden unteren Kontaktteil 42`, um der gewölbten Behältergeometrie Rechnung zu tragen. In der Figur 3b ist der Abstand zwischen den beiden Kontaktteilen 42, 42' im Vergleich zur Figur 3a verkürzt, indem der obere Kontaktteil 42 nach unten verschoben ist. Vorzugsweise sind die beiden Kontaktteile 42, 42' jedoch stets entsprechend oberhalb und unterhalb des Behälterschwerpunktes, gekennzeichnet durch ein "x" in den Figuren 3a, 3b, angeordnet.

Aus der obigen Beschreibung der Führungsgarnitur 40 folgt, dass diese verschiedene Eigenschaften hat, die sie beispielsweise in Bezug auf Lage und Ausrichtung definieren, um optimal mit einem bestimmten Behältertyp zusammenzuwirken. Die Eigenschaften werden durch Parameter wie beispielsweise Höhe der Kontaktteile 42, 42' (in Richtung der Behälterachse 101, die zumeist mit der Schwerkraftrichtung übereinstimmt, gesehen), Entfernung der Kontaktteile 42, 42' bzw. deren Leitflächen 42a, 42a` zur Behälterachse 101, Anstellung der Leitflächen 42a, 42a', Variante/Beschaffenheit der Kontaktteile 42, 42' als Verschleißteile usw., repräsentiert.

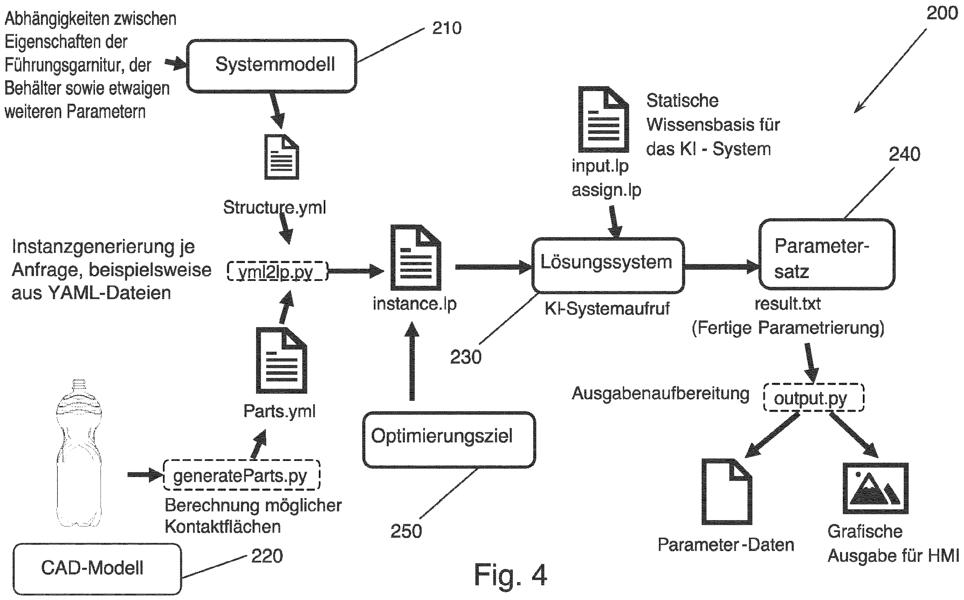

Mittels eines elektronischen Systems 200, insbesondere eines KI-Systems, kann die Parametrierung für die Führungsgarnitur 40 automatisch optimal für unterschiedliche Behältertypen gelöst werden. Die Figur 4 zeigt hierbei schematisch ein System 200 und ein Konzept für die automatische Parametrierung der Führungsgarnitur 40.

Um neue Garniturenparameter automatisch nach Möglichkeit optimal zu berechnen, wird als Basis ein Systemmodell 210 unterschiedlicher Abhängigkeiten, umfassend zumindest Abhängigkeiten zwischen Führungsgarnitur 40 und Behälter 100, erstellt. In die Abhängigkeiten können Elastizität der Behälter 100, Wandstärke, Transportgeschwindigkeiten usw. eingehen. Die Modellierung kann unter Zuhilfenahme standardisierter Werkzeuge, beispielsweise der grafischen Modellierungssprache SysML, erfolgen. Das Systemmodell 210 wird zu einer KI-Wissensbasis transformiert. Dies kann ebenfalls unter Zuhilfenahme standardisierter Werkzeuge (ASP-Modell) erfolgen.

Für die Behältergeometrie wird dem System ein CAD-Modell 220 zur Verfügung gestellt, das vorzugsweise automatisch auf mögliche Kontaktflächen abgetastet wird. Das CAD-Modell kann ein zweidimensionales oder dreidimensionales digitales Modell sein, das die Behälter 100 bzw. einen entsprechenden Behältertyp repräsentiert.

Die möglichen Kontaktflächen der Behältergeometrie und das transformierte Systemmodell 210 (in Figur 4 beispielhaft im YAML-Austauschformat, u.a. structure.yml und parts.yml) sowie zumindest ein etwaiges Optimierungsziel 250 für die Führungseigenschaften werden als Instanz an ein Lösungssystem 230, vorzugsweise ein ASP-Solversystem (beispielsweise Potassco Clingo) übergeben. Das Lösungssystem 230 ist vorzugsweise ein KI-System und erzeugt auf der Basis der Eingaben anfragespezifisch zumindest einen Parametersatz 240 für die Führungsgarnitur 40. Es können auch mehrere Parametersätze 240, d.h. Vorschläge für die Garniturenparameter berechnet werden, die automatisch oder durch eine Bedienperson ausgewählt und/oder adaptieren werden können. Ferner kann eine grafische Ergebnisausgabe der so ermittelten Garniturenparameter erfolgen.

Unter den oben genannten Optimierungszielen 250 ist die Verwendung von Parametern zur möglichst stabilen Führung der Behälter 100 besonders bevorzugt. Grundsätzlich kann über ein solches System 200 auch die Qualität der Parameter auf einen definierten Standard abgesichert werden, da über das Wissensmodell des Konfigurators auch bestimmte Lösungen ausgeschlossen oder bevorzugt werden können.

Die so berechneten und gegebenenfalls ausgewählten Garniturenparameter 240 - umfassend insbesondere eine Höhe der Kontaktteile 42, 42` und/oder Entfernung der Kontaktteile 42, 42' bzw. deren Leitflächen 42a, 42a` zur Behälterachse 101 und/oder Anstellung der Leitflächen 42a, 42a` und/oder Variante/Beschaffenheit der Kontaktteile 42, 42' als Verschleißteil - können nun manuell durch eine Bedienperson oder automatisch durch die Steuerung 50 auf die Vorrichtung 1, insbesondere die Führungsgarnitur 40, angewendet werden.

Die automatische Parametrierung der Führungsgarnitur 40 erhöht generell die Funktionssicherheit der Vorrichtung 1. Die Führungsgarnitur 40 ist optimal auf die zu transportierenden Behälter 100 einstellbar, und die Gefahr einer Beschädigung der Behälter 100 und/oder von Anlagenteilen wird minimiert.

Ferner kann auf eine manuelle, zeitintensive Parametrierung, insbesondere auf der Grundlage von Versuch und Irrtum verzichtet werden. Die Rechenzeit zur automatischen Parametrierung der Führungsgarnitur 40 beträgt in der Regel maximal wenige Sekunden, wodurch eine Umstellung der Vorrichtung 1 auf einen anderen Behältertyp erheblich beschleunigt und die Produktionsleistung erhöht werden.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 1: Vorrichtung zum Transportieren von Behältern
- 10: Einlaufabschnitt
- 11: Teilungsschnecke
- 12: Sperrstern
- 13: Einlaufstern
- 20: Vorrichtung zum Behandeln von Behältern
- 30: Auslaufabschnitt
- 33: Auslaufstern
- 40: Führungsgarnitur
- 41: Führungsrahmen
- 41': Führungsrahmen
- 42: Kontaktteil
- 42': Kontaktteil
- 42a: Leitfläche
- 42a`: Leitfläche
- 44: Verbindungsbolzen
- 50: Steuerung

- 100: Behälter
- 101: Behälterachse

- 200: Elektronisches System zur Parametrierung eine Führungsgarnitur
- 210: Systemmodell
- 220: CAD-Modell
- 230: Lösungssystem
- 240: Parametersatz
- 250: Optimierungsziel

## Patentansprüche

1. Verfahren zur Parametrierung einer Führungsgarnitur (40) zum Führen von Behältern (100) entlang einer Trajektorie in einer Vorrichtung (1) zum Transportieren der Behälter (100), vorzugsweise in einer Getränkeabfüllanlage, wobei das Verfahren aufweist:
Erstellen eines Systemmodells (210), umfassend zumindest Abhängigkeiten zwischen der Führungsgarnitur (40) und den zu transportierenden Behältern (100);
Erstellen zumindest eines CAD-Modells (220) der Behälter (100);
Übergeben des Systemmodells (210) und/oder daraus abgeleiteter Informationen sowie des CAD-Modells (220) der Behälter (100) und/oder daraus abgeleiteter Informationen als Instanz an ein Lösungssystem (230);
Ermitteln unter Anwendung des Lösungssystems (230) zumindest eines Parametersatzes (240) für die Führungsgarnitur (40).

2. Verfahren nach Anspruch 1, **dadurch gekennzeichnet, dass** das Systemmodell (210) zu einer Wissensbasis, vorzugsweise einer KI-Wissensbasis, transformiert wird und diese als aus dem Systemmodell (210) abgeleitete Informationen an das Lösungssystem (230) übergeben wird, wobei die Transformation des Systemmodells (210) zu einer Wissensbasis vorzugsweise unter Anwendung von ASP (Answer Set Programming) erfolgt.

3. Verfahren nach Anspruch 1 oder 2, **dadurch gekennzeichnet, dass** die Erstellung des Systemmodells (210) unter Zuhilfenahme einer grafischen Modellierungssprache, vorzugsweise SysML, erfolgt.

4. Verfahren nach einem der vorigen Ansprüche, **dadurch gekennzeichnet, dass** das CAD-Modell (220) der Behälter (100) auf mögliche Kontaktflächen abgetastet wird und diese als aus dem CAD-Modell (220) abgeleitete Informationen an das Lösungssystem (230) übergeben werden.

5. Verfahren nach einem der vorigen Ansprüche, **dadurch gekennzeichnet, dass** ferner zumindest ein Optimierungsziel betreffend Führungseigenschaften der Führungsgarnitur (40) als Teil der Instanz an das Lösungssystem (230) übergeben wird.

6. Verfahren nach Anspruch 5, **dadurch gekennzeichnet, dass** das Optimierungsziel eine hohe Führungsstabilität der Führungsgarnitur (40) und/oder einen definierten Standard betrifft.

7. Verfahren nach einem der vorigen Ansprüche, **dadurch gekennzeichnet, dass** das Lösungssystem (230) ein KI-System, vorzugsweise ein ASP-Solversystem, ist.

8. Verfahren nach einem der vorigen Ansprüche, **dadurch gekennzeichnet, dass** vom Lösungssystem (230) mehrere Parametersätze (240) für die Führungsgarnitur (40) erzeugt werden.

9. Verfahren nach einem der vorigen Ansprüche, **dadurch gekennzeichnet, dass** die Führungsgarnitur (40) einen oder mehrere Kontaktteile (42, 42`) aufweist, die für einen Kontakt mit den Behältern (100) zur Führung derselben eingerichtet sind, und der unter Anwendung des Lösungssystems (230) ermittelte zumindest eine Parametersatz (240) für die Führungsgarnitur (40) eine Höhe der Kontaktteile (42, 42`) und/oder eine Entfernung der Kontaktteile (42, 42`) zu einer Behälterachse (101) und/oder eine Anstellung der Kontaktteile (42, 42`) und/oder Informationen betreffend eine Variante oder Beschaffenheit der Kontaktteile (42, 42`) umfasst.

10. Computerprogramm zur Parametrierung einer Führungsgarnitur (40) zum Führen von Behältern (100) entlang einer Trajektorie in einer Vorrichtung (1) zum Transportieren der Behälter (100), vorzugsweise in einer Getränkeabfüllanlage, wobei das Computerprogramm Befehle umfasst, die bei der Ausführung des Programms durch einen Computer diesen veranlassen, das Verfahren nach einem der vorigen Ansprüche auszuführen.

11. System (200) zur Parametrierung einer Führungsgarnitur (40) zum Führen von Behältern (100) entlang einer Trajektorie in einer Vorrichtung (1) zum Transportieren der Behälter (100), vorzugsweise in einer Getränkeabfüllanlage, wobei das System (200) Mittel zur Ausführung des Verfahrens nach einem der Ansprüche 1 bis 9 umfasst.
